# EUROPÄISCHE PATENTANMELDUNG

(11) **EP 0 879 735 A2**
(43) Veröffentlichungstag der Anmeldung: **25.11.1998**
(21) Anmeldenummer: 98107440.4
(22) Anmeldetag: 23.04.1998
(51) Int. Cl.: B60Q 1/26

(54) **Leuchte, insbesondere Heckleuchte, für Fahrzeuge, vorzugsweise Kraftfahrzeuge**

(30) Priorität: 23.05.1997 DE 19721596
(71) Anmelder: REITTER & SCHEFENACKER GmbH & Co. KG, D-73730 Esslingen (DE); MC Micro Compact Car Aktiengesellschaft, 2500 Biel 4 (CH)
(72) Erfinder: Stopp, Walter, 73226 Deggingen (DE); Rappl, Christian, 71272 Renningen (DE); Kitzhöfer, Susanne, 73061 Ebersbach (DE); Butsch, Erwin, 71397 Leutenbach (DE)
(74) Vertreter: Jackisch-Kohl, Anna-Katharina

(57) **Zusammenfassung**

Die Leuchte hat einen mit einem Fahrzeugteil (11) zu verbindenden Lampenträger (1) für einen Leuchtkörper (2), der hinter einem Lichtfenster (16 bis 18) liegt. Um die Leuchte so auszubilden, daß sie einfach aufgebaut und kostengünstig montiert werden kann, ist der Lampenträger (1) gegen den Fahrzeugteil (11) durch ein Halterungsteil (9) gedrückt, das am Fahrzeugteil (11) befestigbar ist. Dem Halterungsteil (9) kommt die zentrale Montageaufgabe zu, während der Lampenträger (1) mit dem Lichtfenster (16 bis 18) unter dem Anpreßdruck des Halterungsteiles (9) zusammengehalten wird.

## Beschreibung

Die Erfindung betrifft eine Leuchte, insbesondere eine Heckleuchte, für Fahrzeuge, vorzugsweise für Kraftfahrzeuge, nach dem Oberbegriff des Anspruches 1.

Bekannte Heckleuchten sind im wesentlichen als Schweiß- oder Klebekonstruktionen aufgebaut und werden über zwei oder mehr Schraubbolzen, die rückseitig am Lampentrager oder Reflektor montiert bzw. angespritzt sind, an die Fahrzeugkarosserie gezogen. Die Montage einer solchen Heckleuchte ist aufwendig und schwierig.

Der Erfindung liegt die Aufgabe zugrunde, die gattungsgemäße Leuchte so auszubilden, daß sie einfach aufgebaut und kostengünstig montiert werden kann.

Diese Aufgabe wird bei der gattungsgemäßen Leuchte erfindungsgemäß mit den kennzeichnenden Merkmalen des Anspruches 1 gelöst.

Bei der erfindungsgemäßen Leuchte wird der Lampenträger durch das Halterungsteil gegen das Fahrzeugteil gedrückt. Darum kommt dem Halterungsteil die zentrale Montageaufgabe zu, während der Lampenträger mit dem Lichtfenster unter dem Anpreßdruck des Halterungsteiles zusammengehalten wird. Vorteilhaft wird das Lichtfenster mit dem gehäuseförmigen Lampenträger verclipst, so daß eine einfache Montage gewährleistet ist.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: In Ansicht eine erfindungsgemäße Leuchte,
- Fig. 2 bis Fig. 7: jeweils Schnitte längs der Linie II-II bis VII-VII in Fig. 1.

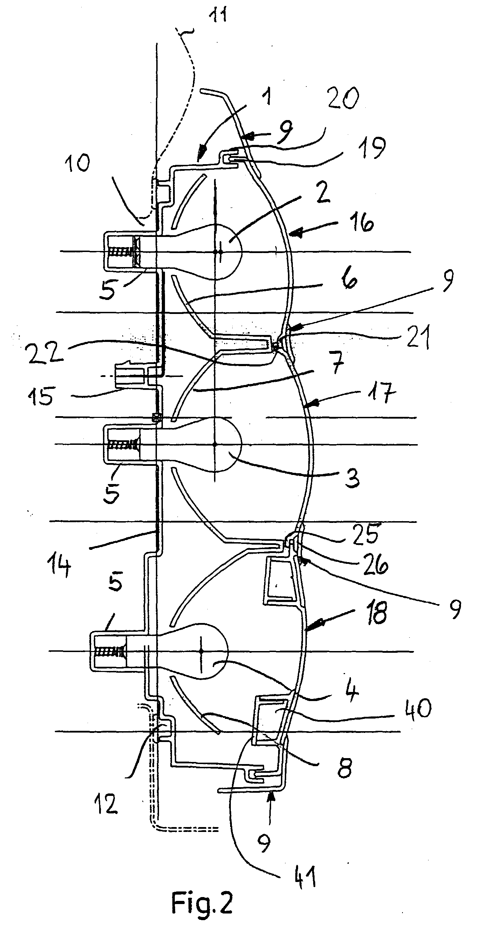

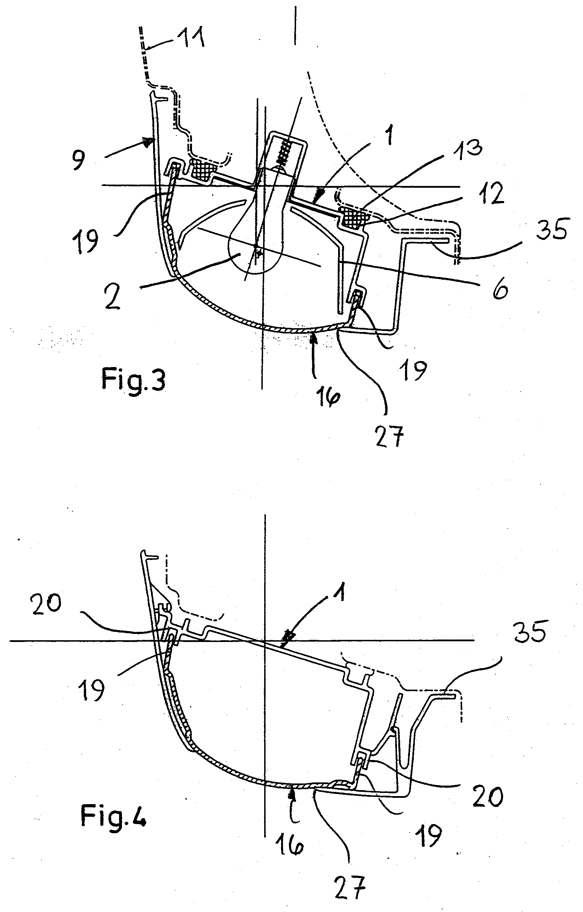

Die Leuchten ist für Fahrzeuge, insbesondere Kraftfahrzeuge, vorgesehen und wird im dargestellten Ausführungsbeispiel als Heckleuchte eingesetzt. Sie hat einen Lampenträger 1, der Leuchtkörper 2 bis 4 (Fig. 2) aufnimmt. Sie sind im Ausführungsbeispiel Glühlampen, die in entsprechende Fassungen 5 des Lampenträgers 1 eingesetzt sind. Der Leuchtkörper 2 ist ein Schlußlicht oder Bremslicht, die Leuchte 3 ein Blinklicht und die Leuchte 4 eine Nebelschlußleuchte oder ein Rückfahrlicht. Die Leuchtkörper 2 bis 4 liegen jeweils vor einem Reflektor 6 bis 8. Die Reflektoren 6 bis 8 sind vorteilhaft einstückig miteinander ausgebildet. Der Lampenträger 1 wird mittels einer Blende 9 in noch zu beschreibender Weise gegen den Rand einer Einbauöffnung 10 in einer Karosserie 11 des Fahrzeuges gedrückt. Der Lampenträger ist auf seiner von den Reflektoren 6 bis 8 abgewandten Seite mit einer vorteilhaft umlaufenden Aufnahme 12 versehen, in die eine Dichtung 13 (Fig. 3) eingelegt ist. In der Einbaulage der Leuchte liegt der Lampenträger 1 mit dieser Dichtung 13 dichtend am Rand der Einbauöffnung 10 der Karosserie 11 an. Die Aufnahme 12 ist nutförmig ausgebildet.

Die Fassungen 5 der Leuchtkörper 2 bis 4 ragen durch die Einbauöffnung 10 der Karosserie 11. Dadurch können die Leuchtkörper 2 bis 4 in einfacher Weise im Bedarfsfall ausgewechselt werden. Die die Aufnahme 12 aufweisende Rückseite 14 des Lampenträgers 1 ist vorteilhaft eben ausgebildet, kann aber, je nach den Einbauverhältnissen, selbstverständlich auch jede andere geeignete Form haben. Wie Fig. 2 beispielhaft zeigt, steht von der Rückseite 14 des Lampenträgers 1 wenigstens ein angeformter Zentralstecker 15 ab, an den ein Gegenstecker angeschlossen und verrastet werden kann.

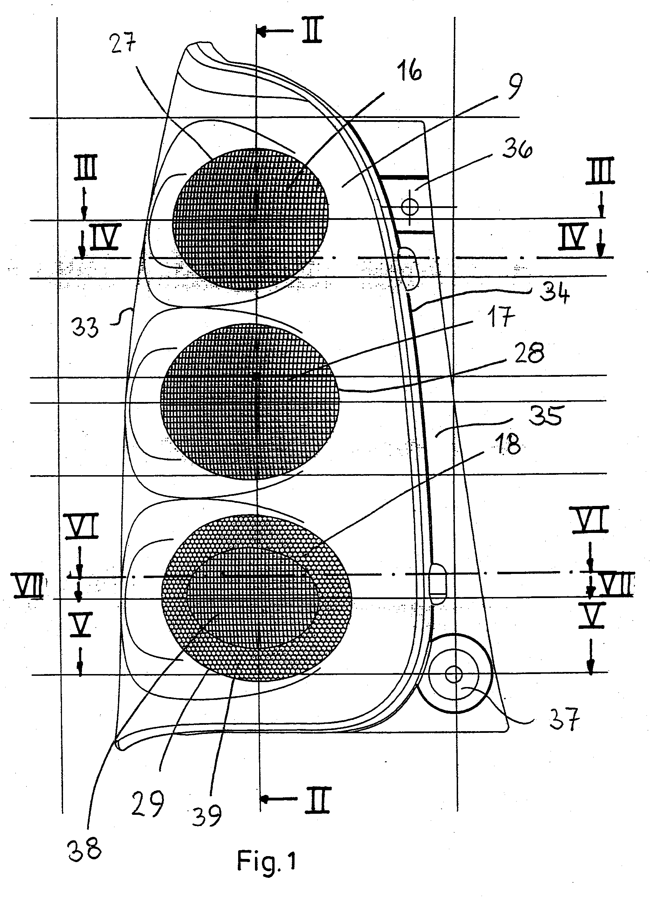

Die der Rückseite 14 gegenüberliegende offene Seite des Lampenträgers 1 ist durch drei einstückig miteinander ausgebildete Lichtfensterteile 16 bis 18 geschlossen, die durch die Blende 9 gehalten sind und ein mehrfarbiges einstückiges Lichtfenster bilden. Die Lichtfensterteile 16 bis 18 sind, wie Fig. 1 zeigt, oval ausgebildet, können selbstverständlich aber auch kreisrunde Form, eckigen Umriß und dergleichen haben. Wie Fig. 2 zeigt, überlappen benachbarte Lichtfensterteile 16 bis 18 einander im Randbereich.

Wie die Fig. 3 und 4 für das Lichtfensterteil 16 zeigen, hat es einen hochgezogenen Rand 19, der mit seinem freien Ende in eine U-förmige Aufnahme 20 des Lampenträgers 1 eingreift, vorteilhaft unter Zwischenlage einer (nicht dargestellten) Dichtung. Das Lichtfensterteil 16 weist, wie sich aus Fig. 2 ergibt, im Bereich neben dem benachbarten Lichtfensterteil 17 einen hochgezogenen Rand nicht auf. Vielmehr verläuft in diesem Bereich der Rand 21 des Lichtfensterteiles 16 in Richtung auf das benachbarte Lichtfensterteil 17, das seinerseits mit einem gegen das Lichtfensterteil 16 gerichteten Rand 22 den Rand 21 des Lichtfensterteiles 16 übergreift. Dementsprechend ist auch der Lampenträger 1 im Bereich der Ränder 21, 22 der nebeneinander liegenden Lichtfensterteil 16, 17 nicht mit einer Aufnahme 20 versehen.

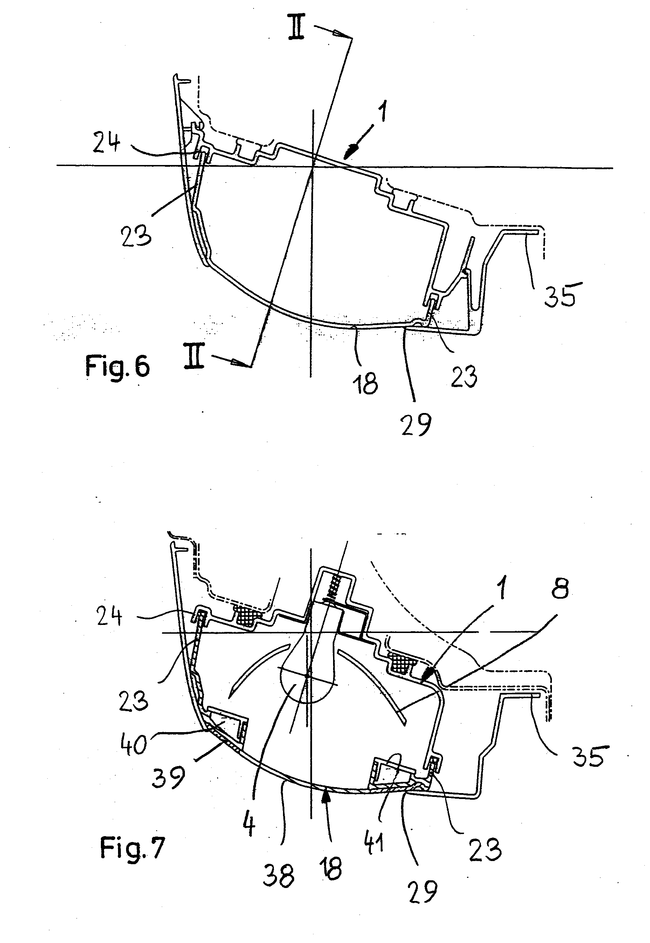

Auch die Lichtfensterteile 17, 18 sind in entsprechender Weise ausgebildet. Wie die Fig. 6 und 7 für das Lichtfensterteil 18 zeigen, hat es ebenfalls den hochgezogenen Rand 23, der in die entsprechende U-förmige Aufnahme 24 des Lampenträgers 1 eingreift. Die Lichtfensterteile 17, 18 haben, wie Fig. 2 zeigt, an ihren einander benachbarten Seiten einander überlappende Ränder 25 und 26, die ebenso wie die einander überlappenden Ränder 21, 22 der Lichtfensterteile 16, 17 auf der Lichtscheibenseite durch die Blende 9 verdeckt sind.

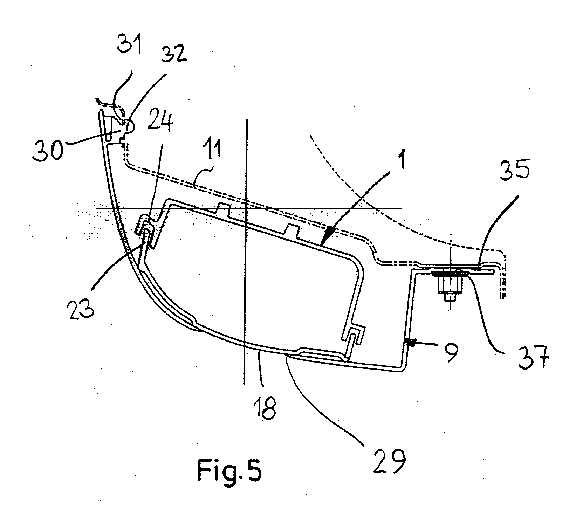

Die Blende 9 bildet die Außenseite der Leuchte und weist für die Lichtfensterteile 16 bis 18 entsprechende Öffnungen 27 bis 29 auf. Der Rand dieser Öffnungen 27 bis 29 ist verjüngt ausgebildet, so daß ein sanfter Übergang von der Blende 9 zur Oberseite des frei liegenden Teils des jeweiligen Lichtfensterteiles 16 bis 18 gegeben ist. Wie Fig. 5 zeigt, ist die Blende 9 mit mindestens einem Einhängedorn 30 versehen, mit dem die Blende 9 in eine Öffnung 31 in der Karosserie 11 eingreift. Der Einhängedorn 30 hat eine mit einem Hinterschnitt versehene Rastnase 32, die in der Einbaulage den Rand der Öffnung 31 hintergreift, so daß die Blende 9 einwandfrei in der Einbaulage gesichert ist. Um eine optimale Befestigung der Blende 9 an der Karosserie 11 zu gewährleisten, ist die Blende mit mindestens zwei solcher Einhängedorne 30 versehen. Sie sind an der einen Längsseite 33 (Fig. 1) der Blende 9 mit Abstand voneinander vorgesehen.

An der gegenüberliegenden Längsseite 34 hat die Blende 9 einen im wesentlichen ebenen, über diese Längsseite vorstehenden Steg 35 (Fig. 1 und 3 bis 7), an dem mit Abstand voneinander zwei Schraubpunkte 36, 37 vorgesehen sind. Die Schraubpunkte sind durch Öffnungen gebildet, durch welche Schraubelemente ragen, mit denen die Blende 9 an der Karosserie 11 befestigt werden kann.

Der Lampenträger 1 mit den angesetzten Lichtfensterteilen 16 bis 18 wird mit der Blende 9 gegen die Karosserie 11 gepreßt. Hierzu wird die Blende 9 zunächst mit den Einhängedornen 30 in die entsprechenden Karosserieöffnungen 31 eingehängt. Anschließend wird die Blende 9 am gegenüberliegenden Längsrand 34 über die Schraubpunkte 36, 37 an die Karosserie 11 angeschraubt. Dabei wird der Lampenträger 1 über die Lichtfensterteile 16 bis 18 fest gegen den Rand der Einbauöffnung 10 der Karosserie 11 unter Zwischenlage der Dichtung 13 gepreßt. Somit kommt der Blende 9 die zentrale Montageaufgabe zu. Eine gesonderte Befestigung des Lampenträgers 1 und/oder der Lichtfensterteile 16 bis 18 ist nicht erforderlich. Die Blende 9 drückt die Lichtfensterteile 16 bis 18 fest gegen den Lampenträger 1, der seinerseits fest gegen den Rand der Einbauöffnung 10 der Karosserie 11 gedrückt wird. Auf diese Weise ist eine sehr einfache, insbesondere kostengünstige Montage der Leuchte möglich.

Die Einhängedorne 30 sind an der Rückseite der Blende 9 vorgesehen, so daß sie in der Einbaulage nicht sichtbar sind. Auch die Schraubelemente, mit denen die Blende 9 in der beschriebenen Weise an der Karosserie 11 festgeschraubt wird, sind in der Einbaulage verdeckt angeordnet.

Die Blende 9 besteht vorteilhaft aus geeignetem Kunststoff. Die Lichtfensterteile 16 bis 18 und die Blende 9 sind so ausgebildet, daß sie an ihren Berührungsstellen flächig aneinander liegen, so daß die Lichtfensterteile 16 bis 18 beim Anpressen des Lampenträgers 1 an die Karosserie 11 nicht beschädigt werden.

Der Leuchtkörper 4 ist eine Nebelschlußlampe, die so in bezug auf das Lichtfensterteil 18 angeordnet ist, daß das vom Leuchtkörper 4 ausgesandte und teilweise vom Reflektor 8 reflektierte Licht durch den mittleren Bereich des Lichtfensterteiles 18 nach außen tritt. Wie die Fig. 1 und 7 zeigen, ist dieser mittlere Austrittsbereich 38 von einem ringförmigen Austrittsbereich 39 umgeben. Dieser Bereich 39 enthält auf der Rückseite eine Rückstrahleroptik. Im Bereich dieses ringförmigen Austrittsbereiches 39 befindet sich auf der Rückseite des Lichtfensterteiles 18 ein ringförmiger Raum 40, der durch einen Deckel 41 hermetisch dicht verschweißt wird und den Rückstrahler gegen Fremdlicht abdeckt. Die linke Leuchte eines Kraftfahrzeuges ist im zentralen Austrittsbereich 39 des Lichtfensterteiles 18 rot gespritzt, während dieser Bereich bei der rechten Leuchte aus farblosem Material gespritzt ist.

Die Lichtfensterteile 16 bis 18 bestehen vorteilhaft aus Kunststoff und können mit einer geeigneten Linsenoptik an der Rückseite versehen werden. Die Lichtfensterteile 16 bis 18 müssen nicht am Lampenträger 1 oder an der Karosserie angeklebt werden, sondern sind formschlüssig, vorzugsweise clipsartig, mit dem Lampenträger 1 verbunden und werden durch die Blende 9 in ihrer Einbaulage gehalten. Abweichend vom dargestellten Ausführungsbeispiel kann die U-förmige Aufnahme 20, 24 am nach innen gerichteten Rand 19, 23 des jeweiligen Lichtfensterteiles 16 bis 18 vorgesehen sein. In diesem Falle ragt der Lampenträger 1 mit einem entsprechenden Steg in diese U-förmige Aufnahme.

Mit der Blende 9 ist es möglich, durch Einsatz von transparenten Thermoplasten eine sogenannte Skelettoptik zu erzielen, d.h. durch die Blende 9 ist der Innenaufbau der Leuchte zu erkennen. Die Blende 9 läßt sich als gesondertes Bauteil einfach, vorzugsweise durch Spritzgießen, herstellen und kann mit den unterschiedlichsten Strukturen und/oder Farbtönen versehen werden.

## Patentansprüche

1. Leuchte, insbesondere Heckleuchte, für Fahrzeuge, vorzugsweise Kraftfahrzeuge, mit mindestens einem mit einem Fahrzeugteil, vorzugsweise der Karosserie, zu verbindenden Lampenträger für wenigstens einen Leuchtkörper, der hinter einem Lichtfenster liegt,
dadurch gekennzeichnet, daß der Lampenträger (1) gegen den Fahrzeugteil (11) durch wenigstens ein Halterungsteil (9) gedrückt ist, das am Fahrzeugteil (11) befestigbar ist.

2. Leuchte nach Anspruch 1,
dadurch gekennzeichnet, daß das Halterungsteil (9) mindestens eine Öffnung (27 bis 29) für das Lichtfenster (16 bis 18) aufweist.

3. Leuchte nach Anspruch 1 oder 2,
dadurch gekennzeichnet, daß das Lichtfenster (16 bis 18) mindestens einen gegen den Lampenträger (1) gerichteten Rand (19, 23) aufweist, der mit wenigstens einem gegen das Lichtfenster (16 bis 18) gerichteten Rand (20, 24) des Lichtfensters (16 bis 18) verbunden ist.

4. Leuchte nach Anspruch 3,
dadurch gekennzeichnet, daß der Rand (19, 23; 20, 24) des Lichtfensters (16 bis 18) oder des Lampenträgers (1) als U-förmige Aufnahme ausgebildet ist.

5. Leuchte nach einem der Ansprüche 1 bis 4,
dadurch gekennzeichnet, daß der Lampenträger (1) unter Zwischenlage wenigstens einer Dichtung (13) am Fahrzeugteil (11) anliegt, die vorzugsweise in einer an der Rückseite (14) des Lampenträgers (1) vorgesehenen Aufnahme (12) untergebracht ist.

6. Leuchte nach einem der Ansprüche 1 bis 5,
dadurch gekennzeichnet, daß das Halterungsteil (9) wenigstens einen, vorzugsweise zwei Schraubpunkte (36, 37) aufweist, die vorteilhaft an einer Seite (34) des Halterungsteiles (9) vorgesehen sind.

7. Leuchte nach einem der Ansprüche 1 bis 6,
dadurch gekennzeichnet, daß das Halterungsteil (9) mindestens ein Einhängeteil (30) aufweist, mit dem es in das Fahrzeugteil (11) einhängbar ist, und daß das Einhängeteil (30) und der Schraubpunkt (36, 37) an einander gegenüberliegenden Seiten (33, 34) des Halterungsteiles (9) vorgesehen sind.

8. Leuchte nach Anspruch 7,
dadurch gekennzeichnet, daß der Schraubpunkt (36, 37) an einem quer abstehenden Steg (35) des Halteungsteiles (9) vorgesehen ist.

9. Leuchte nach einem der Ansprüche 1 bis 8,
dadurch gekennzeichnet, daß das Halterungsteil (9) als Blende ausgebildet ist, die den Lampenträger (1) abdeckt.

10. Leuchte nach einem der Ansprüche 1 bis 9,
dadurch gekennzeichnet, daß das Halterungsteil (9) mit dem Rand seiner Öffnung (27 bis 29) am Lichtfenster (16 bis 18) unter Druck anliegt.
